# EUROPÄISCHE PATENTANMELDUNG

(11) **EP 4 477 202 A1**
(43) Veröffentlichungstag der Anmeldung: **18.12.2024**
(21) Anmeldenummer: 24181620.6
(22) Anmeldetag: 12.06.2024
(51) Int. Cl.: A61H 1/00, A61H 1/02, B60N 2/90, A47C 7/42

(54) **VORRICHTUNG ZUR MOBILISIERUNG DES RÜCKENS SOWIE EINE ANORDNUNG**

(30) Priorität: 16.06.2023 DE 202023103331 U
(71) Anmelder: Sazegar-Kühl, Ehsan, 20535 Hamburg (DE)
(72) Erfinder: Sazegar-Kühl, Ehsan, 20354 Hamburg (DE)
(74) Vertreter: Stork Bamberger Patentanwälte PartmbB

(57) **Zusammenfassung**

Die vorliegende Erfindung betrifft eine Vorrichtung (10) zur Mobilisierung des Rückens (11), insbesondere der Wirbelsäule (12) und/oder eines Bereichs des Rückens (11), umfassend mindestens eine Mobilisierungseinrichtung (13) mit einer Längsausdehnung (14) und einer Breitenausdehnung (15), wobei die Mobilisierungseinrichtung (13) einen Mobilisierungsabschnitt (16), der in der Längsausdehnung (14) und/oder in der Breitenausdehnung (15) im Wesentlichen konvex ausgebildet und eingerichtet ist, und einen Positionierungsabschnitt (17) umfasst, wobei die Mobilisierungseinrichtung (13) zumindest teilweise aus einem elastischen Material besteht und derart ausgebildet und eingerichtet ist, dass bei entsprechender Belastung des Mobilisierungsabschnitts (16) durch Personen der Rücken (11 entlang der konvexen Erstreckung zumindest teilweise in Anlage mit der Längsausdehnung (14) und/oder der Breitenausdehnung (15) bringbar ist, um den Rücken (11) entlang der Längsausdehnung (14) zu strecken/beugen und/oder um die Breitenausdehnung (15) nach links/rechts zu rotieren, wobei eine spezifische Bewegung des Rückens (11) und/oder ein Bereich des Rückens (11), insbesondere einzelner Wirbelsäulensegmente (19), ausführbar ist. Des Weiteren betrifft die Erfindung eine entsprechende Anordnung.

## Beschreibung

Die Erfindung betrifft eine Vorrichtung zur Mobilisierung des Rückens von sitzenden Personen, insbesondere der Wirbelsäule und/oder eines Bereichs des Rückens.

Weiterhin betrifft die Erfindung eine Anordnung umfassend eine Vorrichtung zur Mobilisierung des Rückens von sitzenden Personen, insbesondere der Wirbelsäule und/oder eines Bereichs des Rückens.

Vorrichtung zum Mobilisieren des Rückens von Personen sind seit vielen Jahren aus dem Stand der Technik bekannt. Derartige Vorrichtungen dienen in der Regel zur Verbesserung der allgemeinen Beweglichkeit. Die allgemeine Beweglichkeit ist die Fähigkeit, Bewegungen gezielt mit dem optimalen Bewegungsausmaß mehrerer Gelenke ausführen zu können. Die allgemeine Beweglichkeit kann in eine aktive und eine passive Beweglichkeit unterteilt werden. Die aktive Beweglichkeit beschreibt die Fähigkeit eine Gelenkstellung unter aktiver Muskelanspannung ohne Schwung einzunehmen. Sie umfasst die größtmögliche Bewegungsamplitude, die durch Muskelkontraktion erreicht werden kann. Die passive Beweglichkeit ist dazu im Gegensatz die größtmögliche Bewegungsamplitude, die durch die Einwirkung äußerer Kräfte (z. B. Partner, Gewichte, Trainingsvorrichtungen) erreicht werden kann. Sie wird als anatomischer Bewegungsbereich bezeichnet. Die passive Beweglichkeit ist größer als die aktive Beweglichkeit.

Die Beweglichkeit der Wirbelsäule in den verschiedenen Bewegungsebenen wird als "segmentale Beweglichkeit" (Bewegungsamplitude zwischen zwei benachbarten Wirbeln in einer definierten Bewegungsebene) bezeichnet. Ein Segment der Wirbelsäule beschreibt eine Etage der Wirbelsäule, d. h. einen Wirbelkörper mit einem darüber oder darunter liegenden Wirbelkörper einschließlich der dazwischen liegenden Bandscheibe und weiterer verbindender Strukturen. Die Beweglichkeit der einzelnen Wirbelsäulensegmente ergibt in der Summe die Gesamtmobilität der Wirbelsäule in verschiedenen Bewegungsebenen. Dies kann die Ebene Flexion-Extension (Vorbeugen-Rückbeugen bzw. Strecken-Beugen) oder die Ebene Lateralflexion (Seitneigung) rechts-links sowie die Ebene Rotation (Drehung) rechts-links sein.

Die segmentale Beweglichkeit der Wirbelsäule ist essentiell. Nicht nur in der Rehabilitation von Akutpatienten, sondern auch in der Prävention. Für den Sportler ist es wichtig, durch eine gut erhaltene Beweglichkeit der Wirbelsäule Verletzungen zu vermeiden und somit optimale Leistungen zu erbringen. Im Berufsalltag ist die Erhaltung der Wirbelsäulenbeweglichkeit wichtig, um berufsbedingte Einseitigkeiten auszugleichen. Genauso gilt es im privaten Alltag vermehrt zu vermeiden, dass der heutige Lebensstil und die damit verbundenen Gewohnheiten unsere Wirbelsäule unbeweglicher und steifer machen. Durch den Wandel der Lebensgewohnheiten der Menschen haben sich die Leistungsanforderungen stark verändert. Für einen Großteil der Menschen sind sitzende Tätigkeiten, oft über acht Stunden und mehr, zur Normalität geworden. Hinzu kommen erhöhte Anforderungen an Einsatzbereitschaft, Flexibilität und Konzentration. Hektik, Stress und permanente Anspannungsphasen führen zu unvorhergesehenen Anforderungen und Belastungsspitzen.

Sitzende Tätigkeiten werden häufig mit Hilfe von technischen Geräten wie PC, Laptop und Smartphone ausgeführt und sind aus unserem modernen Leben nicht mehr wegzudenken. Da viele Tätigkeiten im Sitzen ausgeführt werden, gestaltet sich der berufliche und private Alltag über den gesamten Tagesverlauf einseitig. Derartige monotone Belastungen führen regelmäßig zu gesundheitlichen Beeinträchtigungen, insbesondere z. B. zu Bandscheibendegeneration und Bandscheibenvorfällen, Rückenproblemen sowie Beckenproblemen. Dies führt auch zu oder begünstigt Sportverletzungen oder Bewegungseinschränkungen in Verbindung mit Bandverletzungen des gesamten Bewegungsapparates. Solche monotonen und inadäquaten Belastungen können zu Veränderungen des Haltungs- und Bewegungsapparates und zu entzündlichen oder funktionellen Bewegungsstörungen für die Betroffenen zur Folge haben. Die Betroffenen leiden häufig unter Rücken-, Nacken-, Schulter- und Kiefergelenksbeschwerden sowie unter Migräne und Kopfschmerzen. Insgesamt kommt es zu einer Verminderung der Regenerationsfähigkeit und Belastbarkeit, was wiederum mit einer Überlastung der peripheren Nerven und damit zu Gefühlsstörungen und Taubheitsgefühlen in Händen-Fingern und Füßen-Zehen einhergeht. In der Folge leidet das vegetative Nervensystem und damit die nervale Versorgung der inneren Organe bis hin zu organischen Verspannungen und Verdauungsstörungen.

Häufige und lang andauernde Beugungen der Halswirbelsäule und/oder der Lendenwirbelsäule nach vorne (z. B. am Handy und Laptop, im Auto, am Schreibtisch) führen zu einer einseitigen Nutzung der Bewegungsebene. Die Beugung wird häufig und monoton ausgeführt, die Streckung, Rotation und Seitneigung der Wirbelsäule dagegen sehr selten. Dies führt zu einer einseitigen Überdehnung der Facettengelenkkapsel der Wirbelsäule in der Beugung und damit zu einer Schrumpfung bzw. Einschränkung der anderen Bewegungsebenen dieser Gelenkkapsel.

Die Betroffenen verspüren zunächst eine eingeschränkte Beweglichkeit, die unbewusst durch andere Nachbarsegmente kompensiert wird, bis diese ebenfalls einseitig überlastet sind, was spätestens dann zu einer enormen Steifigkeit führt. Dauert diese länger an, können die Gelenke blockieren und die passive Beweglichkeit verhindern. Bei eingeschränkter passiver segmentaler Beweglichkeit der Wirbelsäule sind die Kompensationsstrategien des Körpers erschöpft und Schmerzen treten auf. Die Bewegungsrezeptoren (Sensoren) in den Gelenkkapseln melden dem zentralen Nervensystem (vom Rückenmark zum Gehirn), dass die Beweglichkeit eingeschränkt und disharmonisch ist. Das Gehirn nutzt den Schmerz zu Recht als Alarmsignal, um wichtige Strukturen wie Nerven vor Kompression zu schützen. Neben dem alarmierenden Schmerz erhöht sich auf Befehl des Gehirns die Schutzspannung der umgebenden Muskulatur. Der Muskeltonus steigt, um zu schützen und Bewegung zu verhindern, doch brauchen Betroffene die passive Beweglichkeit, um sich aktiv zu bewegen, was wiederum den alarmierenden Schmerz erhöht und die Schutzspannung der Muskulatur verstärkt.

Um diesem Bewegungsmangel und den damit verbundenen Schmerzen entgegenzuwirken, sind verschiedene Mechanismen bekannt. Häufig helfen Massagen, um die Schutzspannung der Muskulatur herabzusetzen, allerdings nur vorübergehend. Ständige Massagen können die Ursachen nicht beseitigen. Es ist ebenfalls bekannt, dass aktives Muskeltraining zu einer Verbesserung des Zustands führen kann. Wenn jedoch die passive Steifigkeit der Wirbelsäulengelenke überwiegt, kann aktives Training auch zu Schmerzen führen. Zur Mobilisierung des Körpers sind in den letzten Jahren auch vermehrt Geräte, sogenannte Faszienrollen, zur Behandlung der Faszien auf den Markt gekommen. Die Faszien sind überzeichnet zu den Auslösern aller Schmerzen geworden. Das schmerzhafte Dehnen der Faszien auf festen Faszienrollen kann zwar in Einzelfällen helfen, ist aber keine Ursachenbekämpfung. Dauerhaftes symptomatisches Dehnen verfehlt das Ziel einer erwünschten Mobilisierung des Rückens oder eines Bereiches des Rückens. Darüber hinaus besteht die Gefahr von Verletzungen oder einer Verschlimmerung des Zustandes durch die unsachgemäße Anwendung solcher Faszienrollen.

Die bekannten Vorrichtungen haben den Nachteil, dass eine kontinuierliche und zeitintensive Anwendung erforderlich ist, um einerseits eine symptomatische Behandlung und andererseits die gewünschte Verbesserung der Beweglichkeit zu erreichen. Den Betroffenen fehlt in der Regel die Zeit, die Beweglichkeit der Wirbelsäule ausreichend lange und effektiv zu trainieren. Anderen fehlt die Motivation, dies täglich zu tun. Darüber hinaus sind die bekannten Hilfsmittel kompliziert und fehleranfällig in der Anwendung, so dass die Gefahr von Verletzungen oder fehlerhafter Handhabung die Akzeptanz solcher Hilfsmittel mindert. Hinzu kommt, dass Vorrichtungen zur Mobilisierung des Rückens in ihrer Verwendung häufig sehr spezifisch sind und daher ohne intensive Beratung des Endverbrauchers oder des Patienten nicht umsetzbar sind. So muss z.B. der Rücken in vorgegebenen Rhythmen oder mit bestimmten Bereichen der jeweiligen Vorrichtung in Kontakt gebracht werden, um eine entsprechende Mobilisierung zu erzielen.

Während oder nach der Anwendung einer Faszienrolle kommt es häufig zu Schmerzen oder Verspannungen beim Behandelnden. Der Grund für diese Schmerzen liegt darin, dass die Dornfortsätze der Wirbelsäule direkt auf der Rolle aufliegen. Die Knochenhaut der Dornfortsätze besitzt eine große Ansammlung von Schmerzrezeptoren, die bei Druck eine erhöhte Empfindlichkeit und damit Schmerzen im Gehirn auslösen können. Diese Art von Knochenhautschmerz ist vergleichbar mit einem Schlag auf das Schienbein. Überall dort am Körper, wo Knochenkanten und -spitzen direkt unter der Haut liegen und nicht durch puffernde Muskeln geschützt sind, führt Druck relativ schnell zu einer Schmerzwahrnehmung. Außerdem bieten Faszienrollen nur eine Zweidimensionalität, so dass entweder eine Streckung/Beugung oder eine Rechts-/Linksrotation sowie eine Rechtsseitneigung/Linksseitneigung verbessert werden kann. In der Regel sind Faszienrollen jedoch nur für eindimensionale Bewegungen ausgelegt, so dass die jeweils andere Bewegung mit ungeeigneten Dimensionen der Faszienrolle (z.B. Höhe, Durchmesser, Radius) durchgeführt wird.

Darüber hinaus gibt es verschiedene Hilfsmittel zur Verbesserung der Körperhaltung, wie z. B. Gurte, Westen etc. Diese bieten dem Körper eine externe Stützung, führen also zu noch mehr Muskelschwund (Atrophie). Denn je mehr Unterstützung der Körper von außen erfährt, desto ökonomischer reagiert er, in diesem Fall wird die ohnehin schon schwache Muskulatur abgebaut und der Körper wird noch abhängiger von diesen Hilfsmitteln. Auf dem Markt sind auch elektrische Vibrationspads verfügbar.

Diese verfolgen zwar zumindest den richtigen Ansatz, dass der Körper bei einer zu monotonen Beugung beim Sitzen durch eine Vibration daran erinnert werden soll, sich selbst, also aktiv, aufzurichten. Dabei verliert der Nutzer keine Muskeln, sondern trainiert sogar die schwache Haltungsmuskulatur. Aber auch diese Pads haben den großen Nachteil, dass sie jeden Tag auf die Haut geklebt und am Ende des Tages wieder abgenommen werden müssen, dass die Batterien gewechselt werden müssen und dass der Aufwand für die tägliche Anwendung zu groß ist.

Der vorliegenden Erfindung liegt daher die Aufgabe zugrunde, eine Vorrichtung zur Mobilisierung des Rückens von sitzenden Personen, insbesondere der Wirbelsäule und/oder eines Bereichs des Rückens, bereitzustellen, die einerseits einfach und zuverlässig zu handhaben ist und andererseits eine gezielte und intuitive Mobilisierung des Rückens bzw. eines Bereichs des Rückens bewirkt.

Diese Aufgabe wird durch die eingangs genannte Vorrichtung gelöst, umfassend mindestens eine Mobilisierungseinrichtung mit einer sich entlang einer Längsachse erstreckenden Längsausdehnung und einer Breitenausdehnung, wobei die Mobilisierungseinrichtung einen Mobilisierungsabschnitt, der in der Längsausdehnung und/oder in der Breitenausdehnung im Wesentlichen konvex ausgebildet und eingerichtet ist, und einen dem Mobilisierungsabschnitt gegenüberliegend angeordneten Positionierungsabschnitt umfasst, wobei die Mobilisierungseinrichtung zumindest teilweise aus einem elastischen Material besteht und derart ausgebildet und eingerichtet ist, dass bei entsprechender Belastung des Mobilisierungsabschnitts durch Personen der Rücken, insbesondere die Wirbelsäule und/oder ein Bereich des Rückens von sitzenden Personen entlang der konvexen Erstreckung zumindest teilweise in Anlage mit der Längsausdehnung und/oder der Breitenausdehnung bringbar ist, um den Rücken, insbesondere die Wirbelsäule, und/oder einen Bereich des Rückens von sitzenden Personen entlang der Längsausdehnung zu strecken/beugen und/oder um die Breitenausdehnung nach links/rechts zu rotieren, wobei eine spezifische Bewegung des Rückens und/oder ein Bereich des Rückens, insbesondere einzelner Wirbelsäulensegmente, ausführbar ist.

Mit der erfindungsgemäßen Vorrichtung wird eine Kommunikation zwischen zentralem und peripherem Nervensystem (Nerven außerhalb der Wirbelsäule) hergestellt, die segmentale Beweglichkeit des Menschen in Längsstreckung und/oder Breitenstreckung über den Mobilisierungsabschnitt verbessert, wodurch eine Verbesserung von blockierten und steifen Wirbelsäulengelenken erreichbar ist. Durch die entsprechende Bewegung auf dem Mobilisierungsabschnitt handelt es sich bevorzugt nicht um ein Rollen, Dehnen und Massieren der myo-faszialen Strukturen, sondern um eine "etagenweise" (segmentale) Erweiterung der Beweglichkeit der entsprechenden blockierten und steifen Gelenke. Dadurch werden die myo-faszialen Verspannungen gelöst und nicht immer wieder neu aufgebaut, so dass sie nicht endlos und immer wieder, beispielsweise durch Rollen, gelöst werden müssen. Weiterhin wird durch die erfindungsgemäße Vorrichtung sichergestellt, dass eine mehrdimensionale Beweglichkeit der Person erreichbar ist, indem nicht nur die Streckung/Beugung verbessert werden kann, sondern auch eine Rechts-/Linksrotation sowie eine Rechts-/Linksseitneigung mit Hilfe der Breitenausdehnung des Mobilisierungsabschnitts durchführbar ist. Auf diese Weise bleiben die Gelenkkapseln des Rückens bzw. der Wirbelsäule in alle Richtungen und Ebenen dehnfähig, wodurch die umliegenden Muskeln und Faszien beweglich bleiben. Eine bessere segmentale Beweglichkeit führt zu einer besseren nervalen Versorgung der Muskeln, Gelenke und Organe, damit zu einer erhöhten Belastbarkeit in Ihrem Job, Sport und anderen Tätigkeiten.

Darüber hinaus werden unbewusste Kompensationen der Hals- und Lendenwirbelsäule vermieden und damit die in diesen Wirbelsäulenregionen häufig auftretenden Bandscheibenschäden primär- und sekundärpräventiv reduziert. Aufgrund der Studienlage ist bekannt, dass die häufigsten Bandscheibenschäden in der unteren Halswirbelsäule sowie in der unteren Lendenwirbelsäule auftreten. Weiterhin ist aus der Anatomie des vegetativen (autonomen) Nervensystems ersichtlich, dass die inneren Organe als Zielorgane ebenfalls aus dem Rückenmark (Spinalkanal) nerval versorgt werden. Herz und Lunge werden von der oberen/mittleren Brustwirbelsäule, die Verdauungsorgane von der mittleren/unteren Brustwirbelsäule und die Geschlechtsorgane von der unteren Brustwirbelsäule und der Lendenwirbelsäule versorgt. Ebenfalls ist aus dem Zahnradmodell bekannt, dass die Brustwirbelsäule das Zentrum der Beweglichkeit der Wirbelsäule ist. Daraus lässt sich ableiten, dass eine optimale segmentale Beweglichkeit der Wirbelsäule zu weniger Schmerzsignalen des zentralen Nervensystems und zu einer allgemeinen Verbesserung der nervalen und physischen Gesundheit führt.

Die erfindungsgemäße Vorrichtung bietet eine Vielzahl von weiteren Vorteilen für die sitzende Person, da keine zusätzliche Zeit für die Mobilisierung des Rückens, insbesondere der Wirbelsäule und/oder eines Bereichs des Rückens, eingeplant werden muss. Die Vorrichtung ist bei sitzenden Tätigkeiten (z.B. im Büro) einsetzbar, indem sie an der entsprechenden Stelle des Rückens, z.B. im Bereich blockierter, steifer oder eingeschränkt beweglicher Wirbelsäulensegmente, appliziert wird. Zu diesem Zweck ist die Vorrichtung vorzugsweise an dem entsprechenden (Büro-)Stuhl anbringbar. Die erfindungsgemäße Vorrichtung kann bei verschiedenen Tätigkeiten eingesetzt werden. Bei einem Einsatz während des Autofahrens und einer entsprechenden Positionierung der Vorrichtung am Autositz kann bei aktiver Autofahrt der Sitz automatisch zur Verbesserung der passiven Beweglichkeit und damit zur Erweiterung der Dehnfähigkeit der Gelenkkapseln genutzt werden. Dadurch werden bevorzugt automatisch die inneren Bauchorgane vom ständigen Druck beim Sitzen entlastet und Platz und Raum für die Verdauungsförderung geschaffen.

In weiteren vorteilhaften Ausführungsformen ist die erfindungsgemäße Vorrichtung alternativ oder ergänzend auch zur aktiven Anbringung an der anwendenden Person, beispielsweise am Rücken oder Rumpf, zur Durchführung einer Mobilisierung mit einer Gegenlage, beispielsweise in Rückenlage auf dem Boden, vorgesehen. Bei einer Anordnung am Rücken kann die Vorrichtung nicht wie ein Ball oder eine Faszienrolle wegrutschen oder wegrollen. Mit der erfindungsgemäßen Vorrichtung ist es möglich, eine gezielte Mobilisierung einzelner Bereiche des Rückens, z. B. eine segmentweise Mobilisierung der Wirbelsäule, durchzuführen, indem die Vorrichtung in der jeweils gewünschten Position exakt fixiert wird, um eine gezielte Anlage auszubilden und einzurichten. Die erfindungsgemäße Vorrichtung hat vorteilhaft auch eine aufrichtende Wirkung auf die anwendende Person, wodurch der Druck auf die inneren Organe, insbesondere die Bauchorgane, automatisch reduziert wird. Dadurch wird die Weiterleitung der aufgenommenen Nahrung in den Magen-Darm-Trakt erleichtert. Gleichzeitig werden die Spannungen der vorderen und hinteren Muskel-Faszien-Ketten ausgeglichen.

Die erfindungsgemäße Vorrichtung ist somit sehr einfach und effektiv in der Anwendung und kann als zeiteffiziente und zugleich kostengünstige Mobilisierungshilfe eingesetzt werden, um bei sitzenden Tätigkeiten, z. B. im Büro, im Home Office, im Auto, im Flugzeug oder in der Bahn, die passive Beweglichkeit in der eingeschränkten Richtung zu verbessern sowie die nervale Versorgung der inneren Organe aus der Wirbelsäule heraus zu optimieren.

Unter einem im Wesentlichen konvex ausgebildeten Mobilisierungsabschnitt ist im Sinne der Erfindung ein vollständig konvexer Abschnitt oder ein im Wesentlichen konvexer Abschnitt zu verstehen, der insbesondere zur Anlage an den Rücken sitzender Personen, insbesondere an die Wirbelsäule und/oder einen Bereich des Rückens, geeignet ist. Der Mobilisierungsabschnitt ähnelt mit seiner Außenkontur vorzugsweise zumindest teilweise der Außenkontur eines American Footballs oder eines Rugbyballs, insbesondere eines entlang der Längsachse halbierten American Footballs oder Rugbyballs. Vorzugsweise entspricht der Mobilisierungsabschnitt in der Außenkontur zumindest teilweise einem entlang der Längsachse teilweise aufgeschnittenen verlängerten Rotationsellipsoid. Weiter bevorzugt weist der Mobilisierungsabschnitt an den freien Enden der Längsachse jeweils abgeplattete Enden auf.

Eine bevorzugte Ausführungsform ist dadurch gekennzeichnet, dass die Vorrichtung weiter mindestens ein Befestigungselement umfasst, das dazu ausgebildet und eingerichtet ist, die Mobilisierungseinrichtung mit dem Befestigungselement zu verbinden und/oder die Mobilisierungseinrichtung an einem Gegenstand, insbesondere an einer ein Rückenteil aufweisenden Sitzgelegenheit, zu befestigen. Das Befestigungselement ermöglicht es, die Vorrichtung an der gewünschten Position, insbesondere an einem Rückenteil einer Sitzgelegenheit, zuverlässig und bewegungssicher zu befestigen. Auf diese Weise ist sichergestellt, dass der Mobilisierungsabschnitt an dem dafür vorgesehenen Bereich des Rückens bzw. der Wirbelsäule anordenbar ist, um bei einer entsprechenden Belastung des Mobilisierungsabschnitts durch Personen der Rücken, insbesondere die Wirbelsäule und/oder ein Bereich des Rückens von sitzenden Personen entlang der konvexen Erstreckung zumindest teilweise in Anlage mit der Längsausdehnung und/oder der Breitenausdehnung bringbar ist. Damit ist eine zielgerichtete Stimulierung der jeweiligen Bereiche, insbesondere der Wirbelsäulensegmente, erreichbar. Weiter bevorzugt ist die Vorrichtung mittels des mindestens einen Befestigungselements an der jeweils anwenden Person befestigbar, um gleichermaßen eine unerwünschte Bewegungsveränderung zu vermeiden. Das Befestigungselement umfasst vorzugsweise mindestens zwei Befestigungselemente, die sich jeweils an den freien Enden der Längsachse erstrecken.

Eine vorteilhafte Weiterbildung zeichnet sich dadurch aus, dass das mindestens eine Befestigungselement und/oder die mindestens eine Mobilisierungseinrichtung mindestens ein Kopplungselement zum lösbaren Koppeln des mindestens einen Befestigungselements und/oder zum lösbaren Koppeln der Mobilisierungseinrichtung mittels des Kopplungselements mit einem Gegenstand, insbesondere mit einer ein Rückenteil aufweisenden Sitzgelegenheit, umfasst. Auf diese Weise ist ein sicheres und einfaches Koppeln der Vorrichtung gegeben. Vorzugsweise ist ein Koppeln des mindestens einen Kopplungselements mit mindestens einem korrespondierenden Kopplungsmitteln gegeben. Auf diese Weise ist weiter bevorzugt ein Schnellverschluss bereitstellbar, wodurch ein komfortables und kurzfristigen Verbinden und Entfernen der Vorrichtung ausführbar ist. Das mindestens eine Kopplungselement ist vorzugsweise als Schnalle, Klickverschluss, Klettverschluss oder dergleichen ausgebildet und eingerichtet. Das Material einer Schnalle oder eine Klickverschlusses besteht bevorzugt aus mindestens einem Kunststoff, insbesondere einem dauerhaften hochwertigen Kunststoff wie PP, ABS etc.

Eine zweckmäßige Ausgestaltung der Erfindung ist dadurch gekennzeichnet, dass das mindestens eine Befestigungselement als ein sich entlang der Längsachse erstreckendes, ein Kopplungselement aufweisendes Gurtelement ausgebildet und eingerichtet ist. Durch das mindestens eine mindestens ein Kopplungselement aufweisende Gurtelement ist vorzugsweise eine verbesserte Positionierung der Vorrichtung an Rückenlehnen möglich, wodurch eine schnelle und zuverlässige Befestigung bereitgestellt ist. Vorzugsweise ist das Gurtelement ein längenverstellbar ausgebildetes Befestigungsband. Zur Längenverstellbarkeit umfasst das mindestens eine Befestigungselement weiter bevorzugt mindestens ein Verstellelement, beispielsweise eine Öse. Alternativ oder ergänzend ist das mindestens eine Gurtelement zumindest teilweise elastisch ausgebildet und eingerichtet. Vorzugsweise weist das Gurtelement eine Breite im Bereich von 10 mm bis 60 mm, bevorzugt im Bereich von 15 mm bis 40 mm und eine Länge im Bereich von 50 cm bis 200 cm, bevorzugt im Bereich von 75 cm bis 150 cm, auf. Das Gurtelement ist besonders bevorzugt flach gewebt und weist beispielsweise eine Elastizität auf (z. B. 10 % bis 50 %). Mit einem Kopplungselement, insbesondere einem Verschlusselement (Schnalle oder Klickverschluss), ist eine Befestigung der Vorrichtung an allen möglichen Arten von Rückenlehnen mit einem Klick einfach und mühelos durchführbar. Die Vorrichtung kann somit an verschiedenen Orten verwendet werden und ist nicht auf die Verwendung an einer einzigen Sitzgelegenheit beschränkt. Ein und dieselbe Vorrichtung kann zu Hause, im Zug oder im Flugzeug verwendet werden, wodurch jede Sitzgelegenheit in einen ergonomischen und angepassten Sitz umgestaltet werden kann.

In einer weiteren vorteilhaften Ausgestaltung der Erfindung umfasst die Mobilisierungseinrichtung mindestens einen Durchführungsabschnitt, der zum Durchführen des mindestens einen Befestigungselements ausgebildet und eingerichtet ist. Der mindestens eine Durchführungsabschnitt erstreckt sich vorzugsweise entlang der Längsachse der Mobilisierungseinrichtung. In weiteren bevorzugten Ausführungsformen kann mehr als ein Durchführungsabschnitt vorgesehen sein, wobei sich sowohl ein Durchführungsabschnitt entlang der Längsachse, insbesondere durch den Mobilisierungsabschnitt, erstreckt als auch in Verlauf der Breitenausdehnung.

Gemäß einer weiteren bevorzugten Ausführungsform der Erfindung ist der Mobilisierungsabschnitt entlang der Längsachse im Wesentlichen rotationssymmetrisch ausgebildet und eingerichtet. Rotationssymmetrisch bedeutet in diesem Zusammenhang, dass zumindest der Bereich der Vorrichtung im Wesentlichen rotationssymmetrisch ausgebildet und eingerichtet ist, der in Anlage mit dem Rücken, insbesondere der Wirbelsäule und/oder einem Bereich des Rückens, bringbar ist. Dies erhöht weiter die gleichmäßige Mobilisierung der entsprechenden Bereiche. Vorzugsweise entspricht der entsprechende im Wesentlichen rotationssymmetrische Bereich des Mobilisierungsabschnitts in der Außenkontur zumindest im Wesentlichen einem verlängerten Rotationsellipsoids, wobei insbesondere die freien Enden entlang der Längsachse abgeplattet/ abgeflacht ausgebildet und eingerichtet sein können.

Eine weitere zweckmäßige Ausgestaltung der Erfindung ist dadurch gekennzeichnet, dass der Mobilisierungsabschnitt entlang der Längsausdehnung und entlang der Breitenausdehnung im Wesentlichen konvex ausgebildet und eingerichtet ist, wobei die Grundform des Mobilisierungsabschnitts im Wesentlichen eine elliptische Grundform umfasst, die insbesondere an mindestens einem Scheitelpunkt, bevorzugt an zwei Scheitelpunkten, abgeflacht/abgeschnitten ausgebildet und eingerichtet ist. Durch die gewählte Form des Mobilisationsabschnittes wird eine Mehrdimensionalität bei der Mobilisierung des Anwenders erreicht, so dass bei einer Anwendung neben der Streckung/Beugung auch die Rechts-/Linksrotation sowie die Rechts-/Linksseitneigung erreicht und verbessert werden kann. Vorzugsweise entspricht der entsprechende im Wesentlichen rotationssymmetrische Bereich des Mobilisierungsabschnitts in der Außenkontur zumindest im Wesentlichen einem verlängerten Rotationsellipsoids, wobei insbesondere die freien Enden entlang der Längsachse abgeplattet/abgeflacht ausgebildet und eingerichtet sein können. Mit anderen Worten ausgedrückt, weist der Mobilisierungsabschnitt im Wesentlichen eine halbtonnenförmige Grundform bzw. Grundfläche auf.

Eine bevorzugte Weiterbildung der Erfindung zeichnet sich dadurch aus, dass der Positionierungsabschnitt im Wesentlichen eine ebene Fläche ausbildet und einrichtet. Dies erhöht die Abstützeigenschaften, insbesondere auf ebenfalls ebenen Flächen, um eine möglichst homogene und gleichmäßige Positionierung der Vorrichtung zu gewährleisten. Durch einen im Wesentlichen ebenen Positionierungsabschnitt ist die Vorrichtung mit der Mobilisierungseinrichtung insbesondere an einer Rückenlehne mit ebener Oberfläche anordenbar. Weiter bevorzugt entspricht die Kontur des Positionierungsabschnitts im Wesentlichen der zu positionierenden Kontur, um eine möglichst große Auflagefläche auszubilden.

Eine zweckmäßige Ausgestaltung der Erfindung ist dadurch gekennzeichnet, dass der Mobilisierungsabschnitt mit dem Positionierungsabschnitt an einer den Mobilisierungsabschnitt im Wesentlichen umgebenden Kante aneinander anschließt, wobei eine Übergangskante erzeugbar ist. Die umgebende oder umlaufende Kante dient der Abgrenzung zwischen dem Mobilisierungsabschnitt und dem Positionierungsabschnitt, um einen scharfen Übergang zu bilden. Die Übergangskante ist geeignet, eine unbeabsichtigte Lageveränderung der Mobilisierungseinrichtung zu vermeiden, da insbesondere bei einer Neigung der Mobilisierungseinrichtung die Übergangskante an der jeweiligen Auflagefläche der Vorrichtung angreift und somit eine bewegungshemmende Wirkung erzielt werden kann. Vorzugsweise ist der Mobilisierungsabschnitt und der Positionierungsabschnitt mit einem innenliegenden Winkel zueinander ausgebildet, der die Übergangskante ausbildet. Weiter bevorzugt liegt der Winkel in einem Bereich zwischen 15° und 120°, besonders bevorzugt im Bereich zwischen 45° und 100°.

Eine vorteilhafte Weiterbildung zeichnet sich dadurch aus, dass die Breitenausdehnung maximal die Hälfte der Längsausdehnung beträgt. Dies ermöglicht je nach Bemessung der jeweiligen Mobilisierungseinrichtung einerseits eine ausreichend große Dimensionierung der Breitenausdehnung des Mobilisierungsabschnitts, um jeweils ein einzelnes Wirbelsäulensegment entlang der konvexen Erstreckung zu mobilisieren, und andererseits die entsprechende Längsausdehnung des Mobilisierungsabschnitts so zu wählen, dass der Bereich der Wirbelsäule in Anlage an die konvexe Längsausdehnung gebracht werden kann. Auf diese Weise können Personen einzelne Wirbelsäulensegmente in Längsrichtung strecken/beugen und in Breitenrichtung nach links/ rechts rotieren.

Sofern die Längs- oder Breitenausdehnung zu groß oder zu klein gewählt sind, kann dies zu einer unzureichenden Streckung/Beugung oder links-/rechtsseitige Rotation führen sowie eine spezifische segmentale Wirbelsäulenmobilisierung erschweren oder verhindern. Je nach unterschiedlichen anatomischen Gegebenheiten kann die entsprechende Längs- oder Breitenausdehnung anpassbar ausgebildet und eingerichtet sein.

In einer bevorzugten Weiterbildung der Erfindung erstreckt sich der Mobilisierungsabschnitt mit einer Höhe von dem Positionierungsabschnitt, wobei die maximale Höhe der Erstreckung höchstens die Hälfte der Breitenausdehnung beträgt Auf diese Weise wird eine ausreichende Höhe zur Erzeugung einer konvexen Außenkontur der Längs- und/ oder der Breitenausdehnung bereitgestellt, um eine Streckung/Beugung oder links-/rechtsseitige Rotation zur Mobilisierung des Rückens und/oder eines Bereichs des Rückens, insbesondere einzelner Wirbelsäulensegmente, auszubilden und einzurichten. Die Höhe bemisst sich dabei bevorzugt jeweils von dem Positionierungsabschnitt bis zu dem höchsten Punkt der Außenkontur des Mobilisierungsabschnitts.

In einer weiteren vorteilhaften Ausgestaltung der Erfindung ist das elastische Material derart gewählt, dass es bei einer Mobilisierung des Rückens, insbesondere der Wirbelsäule, und/oder eines Bereichs des Rückens um maximal die halbe Höhe reversibel komprimierbar ausgebildet und eingerichtet ist. Je nach gewünschter Intensität der Mobilisierung kann dabei das entsprechende Material geringer oder stärker komprimierbar ausgebildet und eingerichtet sein. Bei einer höheren gewünschten Intensität der Mobilisierung ist das elastische Material bevorzugt geringer komprimierbar und bei einer geringeren gewünschten Intensität der Mobilisierung ist das elastische Material stärker komprimierbar ausgebildet und eingerichtet. Vorzugsweise umfasst das elastische Material zur Erzeugung einer reversiblen Komprimierung mindestens ein flexibles Schaumstoffmaterial.

Eine weitere zweckmäßige Ausgestaltung der Erfindung ist dadurch gekennzeichnet, dass das Außenmaterial des Mobilisierungsabschnitts und/oder der Positionierungsabschnitt im Wesentlichen eine rutschhemmende Oberfläche aufweist. Die im Wesentliche rutschhemmende Oberfläche verhindert oder erschwert ein Verrutschen der Person bei Anlage mit dem Mobilisierungsabschnitt. Dies sicher die Person bei einer Mobilisierung des Rückens bzw. der Wirbelsäule. Vorzugsweise besteht das Außenmaterial des Mobilisierungsabschnitts und/oder das Außenmaterial des Positionierungsabschnitts aus einem rutschhemmenden Material, wozu das jeweilige Außenmaterial beispielsweise mindestens ein Elastomer (z. B. Gummi, Kautschuk, Silikon etc.) umfasst. Weiter bevorzugt umfasst die Oberfläche des Mobilisierungsabschnitts und/oder des Positionierungsabschnitts mindestens eine Erhebung und/oder mindestens eine Ausnehmung, um eine rutschhemmende Wirkung auszubilden und einzurichten. Weiter bevorzugt umfasst die rutschhemmende Oberfläche Noppen oder Materialveränderungen.

Eine vorteilhafte Weiterbildung der Erfindung zeichnet sich dadurch aus, dass die Längsausdehnung des Mobilisierungsabschnitts im Bereich von 10 cm bis 50 cm, bevorzugt im Bereich von 15 cm bis 40 cm und besonders bevorzugt im Bereich von 17 cm bis 30 cm liegt, und/oder dass die Breitenausdehnung des Mobilisierungsabschnitts im Bereich von 5 cm bis 30 cm, bevorzugt im Bereich von 7 cm bis 20 cm und besonders bevorzugt im Bereich von 10 cm bis 15 cm liegt, und/oder dass die Höhe des Mobilisierungsabschnitts im Bereich von 2 cm bis 15 cm, bevorzugt im Bereich von 4 cm bis 10 cm und besonders bevorzugt im Bereich von 5 cm bis 8 cm liegt. Durch die entsprechenden Abmessungen ist eine zuverlässige Anpassung an unterschiedliche Rücken und insbesondere Wirbelsäulen bzw. Wirbelsäulensegmente von Menschen gegeben.

Die Aufgabe wird auch durch die eingangs genannte Anordnung gelöst, umfassend mindestens eine erfindungsgemäße Vorrichtung und eine ein Rückenteil aufweisende Sitzgelegenheit zum Sitzen von Personen, wobei die Vorrichtung derart an der Sitzgelegenheit anordenbar ist, dass Personen beim Sitzen mit dem Rücken, insbesondere mit der Wirbelsäule und/oder einem Bereich des Rückens, in Anlage an die Vorrichtung bringbar sind, um eine Streckung/Beugung in Längsausdehnung und/oder eine links/ rechts Rotation um die Breitenausdehnung auszubilden und einzurichten.

Zur Vermeidung von Wiederholungen wird im Zusammenhang mit der erfindungsgemäßen Anordnung insbesondere auch auf die bereits im Zusammenhang mit der erfindungsgemäßen Vorrichtung im Detail geschilderten Vorzüge verwiesen. Diese gelten in analoger Weise auch für die erfindungsgemäße Anordnung.

Weitere zweckmäßige und/oder vorteilhafte Merkmale und Weiterbildungen sowie bevorzugte Vorrichtungsgegenstände ergeben sich aus den Unteransprüchen und der Beschreibung. Besonders bevorzugte Ausführungsformen der Vorrichtung sowie der Anordnung werden anhand der beigefügten Zeichnungen näher erläutert. In den Zeichnungen zeigen:
- Fig. 1: eine schematische Darstellung einer erfindungsgemäßen Vorrichtung in der Ansicht von oben,
- Fig. 2: eine schematische Frontansicht der in Fig. 1 gezeigten erfindungsgemäßen Vorrichtung,
- Fig. 3: eine schematische Seitenansicht der in Fig. 1 und in Fig. 2 gezeigten erfindungsgemäßen Vorrichtung,
- Fig. 4: eine schematische Seitenansicht einer Ausführungsform einer erfindungsgemäßen Vorrichtung, die auf einer stilisierten Sitzgelegenheit angeordnet ist
und
- Fig. 5: eine weitere schematische Seitenansicht einer an einer Auflage angeordneten erfindungsgemäßen Vorrichtung mit einem/einer stilisierten Rücken/Wirbelsäule eines Menschen.

Anhand der vorgenannten Figuren wird die erfindungsgemäße Vorrichtung und die erfindungsgemäße Anordnung näher beschrieben.

Die in den Zeichnungen dargestellte Vorrichtung ist exemplarisch als Vorrichtung zur Mobilisierung des Rückens von sitzenden Personen, insbesondere der Wirbelsäule und/oder eines Bereichs des Rückens, ausgebildet.

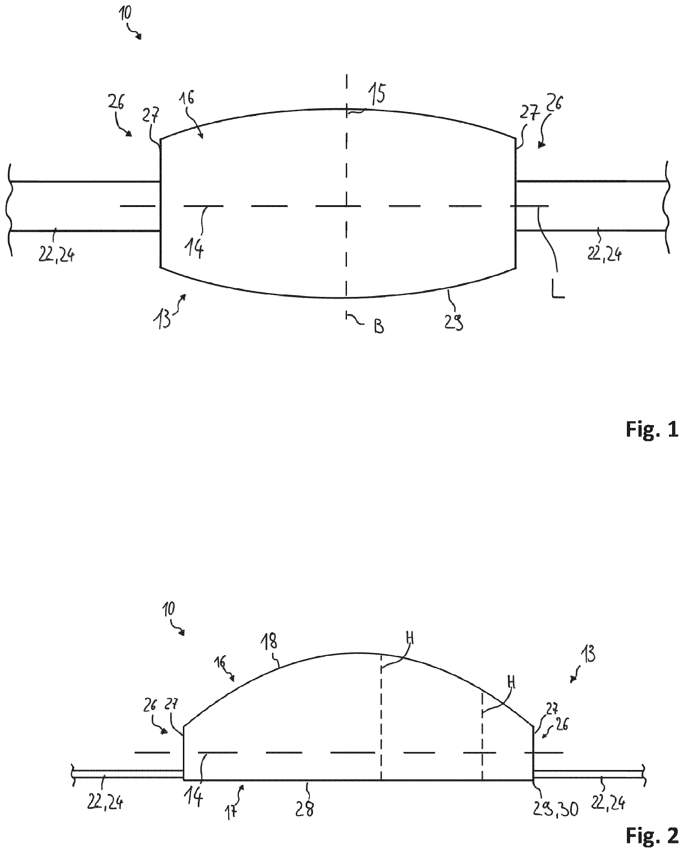

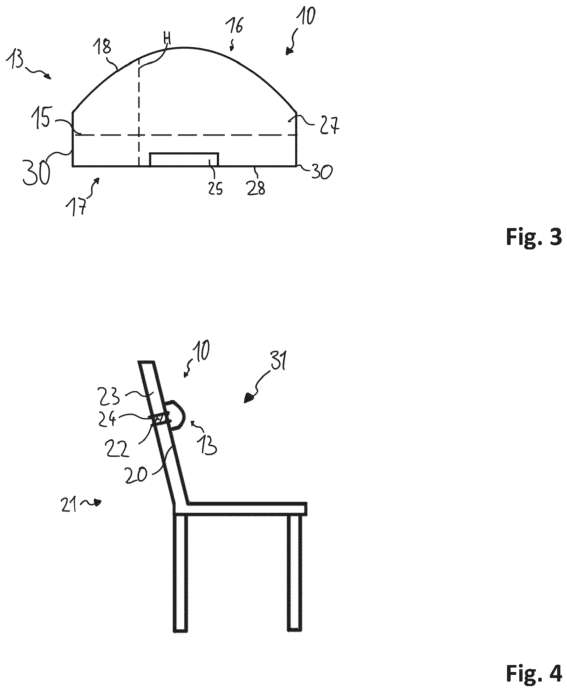

Fig. 1 bis Fig. 5 zeigen jeweils schematisch eine Ausführungsform einer erfindungsgemäßen Vorrichtung 10 zur Mobilisierung des Rückens 11 von sitzenden Personen, insbesondere der Wirbelsäule 12 und/oder eines Bereichs des Rückens 11, umfassend mindestens eine Mobilisierungseinrichtung 13 mit einer sich entlang einer Längsachse L erstreckenden Längsausdehnung 14 und einer Breitenausdehnung 15. Die Mobilisierungseinrichtung 13 mit der sich entlang der Längsausdehnung 14 und der Breitenausdehnung 15 sind insbesondere in der Draufsicht der Fig. 1 gezeigt. Ferner ist die Längsausdehnung 14 in der Frontansicht der Fig. 2 und die Breitenausdehnung 15 in den Fig. 3, Fig. 4 und Fig. 5 im Detail dargestellt. Die Mobilisierungseinrichtung 13 umfasst einen Mobilisierungsabschnitt 16, der in der Längsausdehnung 14 und/oder in der Breitenausdehnung 15 im Wesentlichen konvex ausgebildet und eingerichtet ist, und einen dem Mobilisierungsabschnitt 16 gegenüberliegend angeordneten Positionierungsabschnitt 17. Der konvexe Verlauf des Mobilisierungsabschnitts 16 ist insbesondere in den Fig. 2 und der Fig. 3 dargestellt, indem der Mobilisierungsabschnitt 16 mit einer nach außen gekrümmten Oberfläche 18 ausgebildet ist. Die in den Fig. 1 bis Fig. 5 dargestellte Ausführungsform der erfindungsgemäßen Vorrichtung 10 weist einen Mobilisierungsabschnitt 16 auf, der sowohl in der Längsausdehnung 14 als auch in der Breitenausdehnung 15 im Wesentlichen konvex ausgebildet und eingerichtet ist. Aufgrund des im Wesentlichen konvex ausgebildeten Mobilisierungsabschnitts 16 können die entsprechenden Bemaßungen der Längsausdehnung 14 und der Breitenausdehnung 15 in Verlauf der Längsachse L sowie in Verlauf der Breite B unterschiedlich große Abmessungen aufweisen. Insbesondere weist die sich von dem Positionierungsabschnitt 17 in Richtung der Oberfläche 18 des Mobilisierungsabschnitts 16 erstreckende Höhe H in Verlauf der Längsachse L und der Breite B unterschiedliche Werte auf.

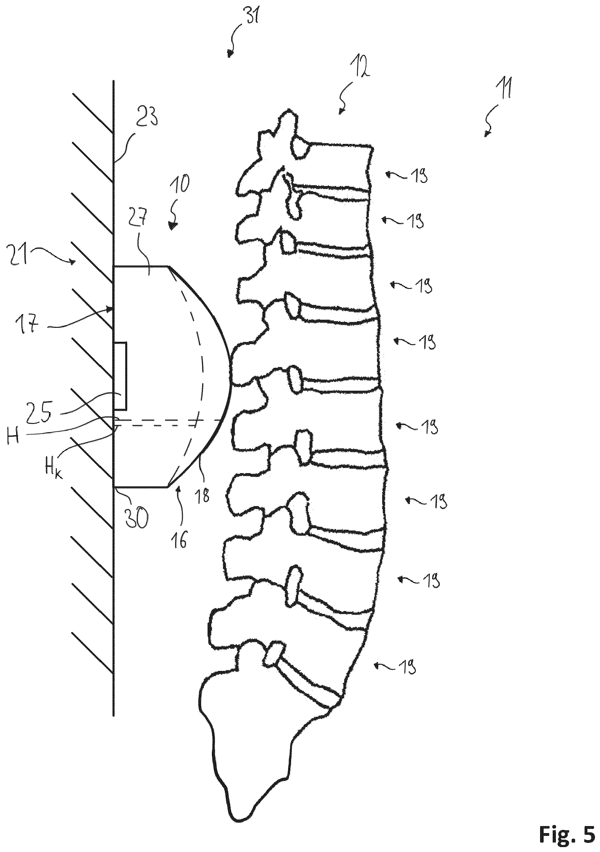

Die Mobilisierungseinrichtung 13, insbesondere der Mobilisierungsabschnitt 16, besteht zumindest teilweise aus einem elastischen Material und ist derart ausgebildet und eingerichtet, dass bei entsprechender Belastung des Mobilisierungsabschnitts 16 durch Personen der Rücken 11, insbesondere die Wirbelsäule 12 und/oder ein Bereich des Rückens von sitzenden Personen entlang der konvexen Erstreckung zumindest teilweise in Anlage mit der Längsausdehnung 14 und/oder der Breitenausdehnung 15 bringbar ist, um den Rücken 11, insbesondere die Wirbelsäule 12, und/oder einen Bereich des Rückens 11 von sitzenden Personen entlang der Längsausdehnung 14 zu strecken/beugen und/oder um die Breitenausdehnung 15 nach links/rechts zu rotieren, wobei eine spezifische Bewegung des Rückens 11 und/oder ein Bereich des Rückens 11, insbesondere einzelner Wirbelsäulensegmente 19, ausführbar ist. Die Fig. 5 zeigt exemplarisch eine Ausführungsform der erfindungsgemäßen Vorrichtung 10 an einer Auflage 20, die in Anlage mit einem Rücken 11, insbesondere einer Wirbelsäule 12, einer Person in Anlage gebracht ist. In der Fig. 5 befindet sich ein Wirbelsäulensegment 19 in Anlage mit dem Mobilisierungsabschnitt 16, um eine Streckung/Beugung und/oder eine Rotation nach links/rechts auszuführen. Die entlang der Längsausdehnung 14 auszuführende Streckung/Beugung bewirkt eine Mobilisierung mindestens eines Wirbelsäulensegmentes 19, was eine spezifische Bewegung darstellt. Die Vorrichtung 10 ist beispielsweise, wie exemplarisch in der Fig. 4 dargestellt, an einer Sitzgelegenheit 21, insbesondere an einem Stuhl, anordenbar.

In einer vorteilhaften Ausführungsform umfasst die Vorrichtung 10 weiter mindestens ein Befestigungselement 22, das dazu ausgebildet und eingerichtet ist, die Mobilisierungseinrichtung 13 mit dem Befestigungselement 22 zu verbinden und/oder die Mobilisierungseinrichtung 13 an einem Gegenstand, insbesondere an einer ein Rückenteil 23 aufweisenden Sitzgelegenheit 21, zu befestigen. Die Fig. 4 zeigt eine Sitzgelegenheit 21, bei der eine erfindungsgemäße Vorrichtung 10 an dem Rückenteil 23 befestigt ist. Bevorzugt ist die Vorrichtung 10 individuell an dem Rückenteil 23 befestigbar, um eine gewünschte Mobilisierung des Rückens 11, insbesondere des gewünschten Bereichs der Wirbelsäule 12, auszubilden und einzurichten. In einer weiteren vorteilhaften Ausführungsform umfasst das mindestens eine Befestigungselement 22 und/oder die mindestens eine Mobilisierungseinrichtung 13 mindestens ein - in den Figuren nicht im Detail gezeigtes - Kopplungselement zum lösbaren Koppeln des mindestens einen Befestigungselements 22 und/oder zum lösbaren Koppeln der Mobilisierungseinrichtung 13 mittels des Kopplungselements mit einem Gegenstand, insbesondere mit einer ein Rückenteil 23 aufweisenden Sitzgelegenheit 21. Das mindestens eine Kopplungselement kann beispielsweise ein Schnallenverschluss sein oder ein Element eines Schnallenverschlusses sein, um die Vorrichtung mit einem korrespondierenden Gegenstück, beispielsweise einer Sitzgelegenheit 21, zu koppeln. Vorzugsweise ist das mindestens eine Befestigungselement 22 als ein sich entlang der Längsachse L erstreckendes, ein Kopplungselement aufweisendes Gurtelement 24 ausgebildet und eingerichtet. In den Fig. 1, Fig. 2 und Fig. 4 ist schematisch das Befestigungselement 22 beispielhaft als ein vereinfachtes und abschnittsweises Gurtelement 24 dargestellt. Das - in den Figuren nicht im Detail gezeigte - Kopplungselement ist insbesondere an dem Gurtelement 24 angeordnet. Das Befestigungselement 22 und/oder das Gurtelement 24 ist/sind weiter bevorzugt zumindest zweiteilig ausgebildet und durch das Kopplungselement getrennt.

In der Fig. 3 und Fig. 5 ist weiter gezeigt, dass die Mobilisierungseinrichtung 13 vorzugsweise mindestens einen Durchführungsabschnitt 25 umfasst, der zum Durchführen des mindestens einen Befestigungselements 22 ausgebildet und eingerichtet ist. Der Durchführungsabschnitt 25 kann, wie in der Fig. 3 und Fig. 5 gezeigt, beispielsweise eine längliche Ausnehmung sein, die zum Durchführen mindestens eines Gurtelements 24 angepasst ist. Der Durchführungsabschnitt 25 ist allerdings nicht auf eine längliche Ausnehmung oder auf einen in Verlauf der Längsachse L ausgebildeten Durchführungsabschnitt 25 beschränkt, sondern kann derart angepasst sein, dass er zum zumindest bereichsweisen Durchführen mindestens eines Befestigungselements 22 vorgesehen ist.

Eine vorteilhafte Ausführungsform zeichnet sich dadurch aus, dass der Mobilisierungsabschnitt 16 entlang der Längsachse L im Wesentlichen rotationssymmetrisch ausgebildet und eingerichtet ist. Den Fig. 1, Fig. 2 und Fig. 3 ist zu entnehmen, dass der Mobilisierungsabschnitt 16 zumindest teilweise rotationssymmetrisch ausgebildet und eingerichtet ist. Insbesondere der mindestens eine konvex verlaufende Mobilisierungsabschnitt ist rotationssymmetrisch gestaltet, insbesondere entlang der Längsachse L. Die Mobilisierungseinrichtung 13 ist nicht vollständig rotationssymmetrisch ausgebildet, da der Grundkörper durch den Positionierungsabschnitts 17 von der vollständigen Rotationssymmetrie "abgeschnitten" ist.

Wie aus der Fig. 1 gezeigt ist, ist der Mobilisierungsabschnitt 16 vorzugsweise entlang der Längsausdehnung 14 und entlang der Breitenausdehnung 15 im Wesentlichen konvex ausgebildet und eingerichtet, wobei die Grundform des Mobilisierungsabschnitts 16 im Wesentlichen eine elliptische Grundform aufweist, die insbesondere an mindestens einem Scheitelpunkt 26, bevorzugt an zwei Scheitelpunkten 26, abgeflacht/ abgeschnitten ausgebildet und eingerichtet ist. Die in den Fig. 1, Fig. 2, Fig. 3 und Fig. 5 gezeigte Vorrichtung 10 umfasst jeweils mindestens ein, vorzugsweise zwei, abgeflachte/s Ende/n 27, das/die in weiteren bevorzugten Ausführungsformen die mindestens eine Öffnung des mindestens einen Durchführungsabschnitts 25 aufweist.

In einer weiteren bevorzugten Ausführungsform ist der Positionierungsabschnitt 17 im Wesentlichen als eine ebene Fläche 28 ausgebildet und eingerichtet. Der eine ebene Fläche 28 aufweisende Positionierungsabschnitt 17 ist, wie in der Fig. 5 dargestellt, insbesondere zur Anlage mit einer, ebenfalls ebenen (planen), Auflage 20 vorgesehen. Der Positionierungsabschnitt 17 ist im Wesentlichen bündig an der Auflage 20 positionierbar, um den Mobilisierungsabschnitt 16 in einer gewünschten Ausrichtung und mit gewünschten Eigenschaften bereitzustellen. In einer vorteilhaften Ausführungsführungsform schließt der Mobilisierungsabschnitt 16 mit dem Positionierungsabschnitt 17 an einer den Mobilisierungsabschnitt 16 im Wesentlichen umgebenden Kante 29 aneinander an, wobei eine Übergangskante 30 erzeugbar ist. Die Übergangskante 30 ist weiter bevorzugt ebenfalls im Bereich der abgeflachten Enden 27 in Verbindung mit dem Positionierungsabschnitt 17 ausgebildet und eingerichtet. Die Fig. 2, Fig. 3 und Fig. 5 zeigen jeweils mindestens eine den Mobilisierungsabschnitt 16 umgebende Kante 29 sowie mindestens eine Übergangskante 30.

Eine weitere vorteilhafte Ausführungsform zeichnet sich dadurch aus, dass die Breitenausdehnung 15 maximal die Hälfte der Längenausdehnung 14 beträgt. Ein derartiges Verhältnis zwischen Breitenausdehnung 15 und Längenausdehnung 14 ist insbesondere in der Fig. 1 gezeigt. Vorzugsweise erstreckt sich der Mobilisierungsabschnitt 16 mit einer Höhe H von dem Positionierungsabschnitt 17, wobei die maximale Höhe H der Erstreckung höchstens die Hälfte der Breitenausdehnung 15 beträgt. In der Fig. 2 sind exemplarisch mehrere Höhen H eingezeichnet, die unterschiedliche Abmessungen aufweisen. Vorzugsweise ist das elastische Material derart gewählt, dass es bei einer Mobilisierung des Rückens 11, insbesondere der Wirbelsäule 12, und/oder eines Bereichs des Rückens 11 um maximal die halbe Höhe H reversibel komprimierbar ausgebildet und eingerichtet ist. Das Material kann dabei in Verlauf der Längsausdehnung 14 und/oder der Breitenausdehnung 15 unterschiedlich komprimierbar ausgebildet und eingerichtet sein, so dass beispielsweise je nach gewünschter Mobilisierung im mittleren Bereich eine stärkere oder eine geringere Komprimierbarkeit ausbildbar ist, als im Bereich des Randes, beispielsweise der abgeflachten Enden 27. In der Fig. 5 ist ein komprimierter Mobilisierungsabschnitt 16 bei der Vorrichtung 10 skizziert, der in der Höhe H bei der Kompression eine geringere Höhe H_{K} aufweist. Durch Anlage des Rückens 11 oder eines Teils des Rückens 11, insbesondere der Wirbelsäule 12 bzw. von Wirbelsäulensegmenten 19, wie in Fig. 5 dargestellt, ist die Höhe H der Vorrichtung 10 vorzugsweise komprimierbar.

Vorteilhafterweise weist das Außenmaterial des Mobilisierungsabschnitts 16 und/oder der Positionierungsabschnitt 17 im Wesentlichen eine - in den Figuren nicht im Detail gezeigte - rutschhemmende Oberfläche auf. Die rutschhemmende Oberfläche kann beispielsweise eine Materialveränderung und/oder eine Oberflächenmodifikation, beispielsweise Erhebungen oder Vertiefungen sein. Die rutschhemmende Oberfläche ist vorzugsweise vergleichbar mit der Oberfläche eines Basketballs oder eines American Footballs.

In einer bevorzugten Ausführungsform liegt die Abmessung der Längsausdehnung 14 des Mobilisierungsabschnitts 16 im Bereich von 10 cm bis 50 cm, bevorzugt im Bereich von 15 cm bis 40 cm und besonders bevorzugt im Bereich von 17 cm bis 30 cm, und/ oder die Abmessung der Breitenausdehnung 15 des Mobilisierungsabschnitts 16 liegt im Bereich von 5 cm bis 30 cm, bevorzugt im Bereich von 7 cm bis 20 cm und besonders bevorzugt im Bereich von 10 cm bis 15 cm, und/oder die Höhe H des Mobilisierungsabschnitts 16 liegt im Bereich von 2 cm bis 15 cm, bevorzugt im Bereich von 4 cm bis 10 cm und besonders bevorzugt im Bereich von 5 cm bis 8 cm. Vorzugsweise ist aufgrund der konvexen Ausgestaltung des Mobilisierungsabschnitts 16 eine Varianz in den jeweiligen Abmessungen der Längsausdehnung 14, der Breitenausdehnung 15 und/oder der Höhe H gegeben.

Nachfolgend ist die erfindungsgemäße Anordnung 31 kurz beschrieben, umfassend mindestens eine erfindungsgemäße Vorrichtung 10 und eine ein Rückenteil 23 aufweisende Sitzgelegenheit 21 zum Sitzen von - in den Figuren nicht dargestellten - Personen, wobei die Vorrichtung 10 derart an der Sitzgelegenheit 21 anordenbar ist, dass Personen beim Sitzen mit dem Rücken 11, insbesondere mit der Wirbelsäule 12 und/oder einem Bereich des Rückens 11, in Anlage an die Vorrichtung 10 bringbar sind, um eine Streckung/Beugung in Längsausdehnung 14 und/oder eine links/rechts Rotation um die Breitenausdehnung 15 auszubilden und einzurichten. Die Anordnung 31 ist in den Fig. 4 und Fig. 5 schematisch und vereinfacht gezeigt. Zur Vermeidung von Wiederholungen wird im Zusammenhang mit der Anordnung 31 auf die Vorzüge der erfindungsgemäßen Vorrichtung 10 verwiesen, die in analoger Weise auch auf die Anordnung 31 Anwendung finden.

## Patentansprüche

1. Vorrichtung (10) zur Mobilisierung des Rückens (11) von sitzenden Personen, insbesondere der Wirbelsäule (12) und/oder eines Bereichs des Rückens (11), umfassend
mindestens eine Mobilisierungseinrichtung (13) mit einer sich entlang einer Längsachse (L) erstreckenden Längsausdehnung (14) und einer Breitenausdehnung (15),
wobei die Mobilisierungseinrichtung (13) einen Mobilisierungsabschnitt (16), der in der Längsausdehnung (14) und/oder in der Breitenausdehnung (15) im Wesentlichen konvex ausgebildet und eingerichtet ist, und einen dem Mobilisierungsabschnitt (16) gegenüberliegend angeordneten Positionierungsabschnitt (17) umfasst,
wobei die Mobilisierungseinrichtung (13) zumindest teilweise aus einem elastischen Material besteht und derart ausgebildet und eingerichtet ist, dass bei entsprechender Belastung des Mobilisierungsabschnitts (16) durch Personen der Rücken (11), insbesondere die Wirbelsäule (12) und/oder ein Bereich des Rückens (11) von sitzenden Personen entlang der konvexen Erstreckung zumindest teilweise in Anlage mit der Längsausdehnung (14) und/oder der Breitenausdehnung (15) bringbar ist, um den Rücken (11), insbesondere die Wirbelsäule (12), und/oder einen Bereich des Rückens (11) von sitzenden Personen entlang der Längsausdehnung (14) zu strecken/beugen und/oder um die Breitenausdehnung (15) nach links/rechts zu rotieren, wobei eine spezifische Bewegung des Rückens (11) und/oder ein Bereich des Rückens (11), insbesondere einzelner Wirbelsäulensegmente (19), ausführbar ist.

2. Vorrichtung (10) nach Anspruch 1, **dadurch gekennzeichnet, dass** die Vorrichtung (10) weiter mindestens ein Befestigungselement (22) umfasst, das dazu ausgebildet und eingerichtet ist, die Mobilisierungseinrichtung (13) mit dem Befestigungselement (22) zu verbinden und/oder die Mobilisierungseinrichtung (13) an einem Gegenstand, insbesondere an einer ein Rückenteil (23) aufweisenden Sitzgelegenheit (21), zu befestigen.

3. Vorrichtung (10) nach Anspruch 2, **dadurch gekennzeichnet, dass** das mindestens eine Befestigungselement (22) und/oder die mindestens eine Mobilisierungseinrichtung (13) mindestens ein Kopplungselement zum lösbaren Koppeln des mindestens einen Befestigungselements (22) und/oder zum lösbaren Koppeln der Mobilisierungseinrichtung (13) mittels des Kopplungselements mit einem Gegenstand, insbesondere mit einer ein Rückenteil (23) aufweisenden Sitzgelegenheit (21), umfasst.

4. Vorrichtung (10) nach Anspruch 2 oder 3, **dadurch gekennzeichnet, dass** das mindestens eine Befestigungselement (22) als ein sich entlang der Längsachse (L) erstreckendes, ein Kopplungselement aufweisendes Gurtelement (24) ausgebildet und eingerichtet ist.

5. Vorrichtung (10) nach einem oder mehreren der Ansprüche 2 bis 4, **dadurch gekennzeichnet, dass** die Mobilisierungseinrichtung (13) mindestens einen Durchführungsabschnitt (25) umfasst, der zum Durchführen des mindestens einen Befestigungselements (22) ausgebildet und eingerichtet ist.

6. Vorrichtung (10) nach einem oder mehreren der Ansprüche 1 bis 5, **dadurch gekennzeichnet, dass** der Mobilisierungsabschnitt (16) entlang der Längsachse (L) im Wesentlichen rotationssymmetrisch ausgebildet und eingerichtet ist.

7. Vorrichtung (10) nach einem oder mehreren der Ansprüche 1 bis 6, **dadurch gekennzeichnet, dass** der Mobilisierungsabschnitt (16) entlang der Längsausdehnung (14) und entlang der Breitenausdehnung (15) im Wesentlichen konvex ausgebildet und eingerichtet ist, wobei die Grundform des Mobilisierungsabschnitts (16) im Wesentlichen eine elliptische Grundform umfasst, die insbesondere an mindestens einem Scheitelpunkt (26), bevorzugt an zwei Scheitelpunkten (26), abgeflacht/abgeschnitten ausgebildet und eingerichtet ist.

8. Vorrichtung (10) nach einem oder mehreren der Ansprüche 1 bis 7, **dadurch gekennzeichnet, dass** der Positionierungsabschnitt (17) im Wesentlichen eine ebene Fläche (28) ausbildet und einrichtet.

9. Vorrichtung (10) nach einem oder mehreren der Ansprüche 1 bis 8, **dadurch gekennzeichnet, dass** der Mobilisierungsabschnitt (16) mit dem Positionierungsabschnitt (17) an einer den Mobilisierungsabschnitt (16) im Wesentlichen umgebenden Kante (29) aneinander anschließt, wobei eine Übergangskante (30) erzeugbar ist.

10. Vorrichtung (10) nach einem oder mehreren der Ansprüche 1 bis 9, **dadurch gekennzeichnet, dass** die Breitenausdehnung (15) maximal die Hälfte der Längsausdehnung (14) beträgt.

11. Vorrichtung (10) nach einem oder mehreren der Ansprüche 1 bis 10, **dadurch gekennzeichnet, dass** sich der Mobilisierungsabschnitt (16) mit einer Höhe (H) von dem Positionierungsabschnitt (17) erstreckt, wobei die maximale Höhe (H) der Erstreckung höchstens die Hälfte der Breitenausdehnung (15) beträgt.

12. Vorrichtung (10) nach einem oder mehreren der Ansprüche 1 bis 11, **dadurch gekennzeichnet, dass** das elastische Material derart gewählt ist, dass es bei einer Mobilisierung des Rückens (11), insbesondere der Wirbelsäule (12), und/oder eines Bereichs des Rückens (11) um maximal die halbe Höhe (H) reversibel komprimierbar ausgebildet und eingerichtet ist.

13. Vorrichtung (10) nach einem oder mehreren der Ansprüche 1 bis 12, **dadurch gekennzeichnet, dass** das Außenmaterial des Mobilisierungsabschnitts (16) und/oder der Positionierungsabschnitt (17) im Wesentlichen eine rutschhemmende Oberfläche aufweist.

14. Vorrichtung (31) nach einem oder mehreren der Ansprüche 1 bis 13, **dadurch gekennzeichnet, dass** die Längsausdehnung (14) des Mobilisierungsabschnitts (16) im Bereich von 10 cm bis 50 cm, bevorzugt im Bereich von 15 cm bis 40 cm und besonders bevorzugt im Bereich von 17 cm bis 30 cm liegt, und/oder dass die Breitenausdehnung (15) des Mobilisierungsabschnitts (16) im Bereich von 5 cm bis 30 cm, bevorzugt im Bereich von 7 cm bis 20 cm und besonders bevorzugt im Bereich von 10 cm bis 15 cm liegt, und/oder dass die Höhe (H) des Mobilisierungsabschnitts (16) im Bereich von 2 cm bis 15 cm, bevorzugt im Bereich von 4 cm bis 10 cm und besonders bevorzugt im Bereich von 5 cm bis 8 cm liegt.

15. Anordnung (10) umfassend mindestens eine Vorrichtung (10) nach einem oder mehreren der Ansprüche 1 bis 14 und eine ein Rückenteil (23) aufweisende Sitzgelegenheit (21) zum Sitzen von Personen, wobei die Vorrichtung (10) derart an der Sitzgelegenheit (21) anordenbar ist, dass Personen beim Sitzen mit dem Rücken (11), insbesondere mit der Wirbelsäule (12) und/oder einem Bereich des Rückens (11), in Anlage an die Vorrichtung (10) bringbar sind, um eine Streckung/Beugung in Längsausdehnung (14) und/oder eine links/rechts Rotation um die Breitenausdehnung (15) auszubilden und einzurichten.
